# EUROPEAN PATENT APPLICATION

(11) **EP 0 811 414 A2**
(43) Date of publication of application: **10.12.1997**
(21) Application number: 97107262.4
(22) Date of filing: 02.05.1997
(51) Int. Cl.: B01D 53/26

(54) **Process and plant using an ejector for utilizing the expansion energy of the purge gas**

(30) Priority: 17.05.1996 IT BG960024
(71) Applicant: STI Strumentazione Industriale S.p.A., 24020 Gorle (BG) (IT)
(72) Inventor: Colombo, Davide, 20062 Cassano D'Adda (MI) (IT)
(74) Representative: Luksch, Giorgio, Dr.-Ing.

(57) **Abstract**

This process and plant for the hot regeneration of adsorbent elements used for drying compressed gases have the characteristic of using an ejector device (122) fed with pressurized purge gas for passing environmental air into equipment (125) provided for its heating, to then cause it to flow alternately into vessels (108, 129) containing the adsorbent elements, which are to be regenerated by removing their retained water by means of the heated mixture of purge gas and atmospheric air, which mixture is then freely discharged in the moist state into the external environment.

## Description

This invention relates to a process and plant for the hot regeneration of adsorbent elements used for drying compressed gases.

As is well known, pneumatics technology is used to an ever increasing extent and for an ever increasing number of uses, including control systems, pneumatic tools, automation, coating plants, etc. To ensure high operational reliability, the compressed air used must be free from moisture, because such moisture could easily encounter such physical conditions as to transform it into water droplets, which could seriously damage the components of the pneumatic system and/or the user machines.

These problems can also concern plants in which the fluid is not air, but specific industrial gases, such as nitrogen, oxygen, etc.

To remove this moisture from compressed gases, plants are proposed using adsorbent elements. The compressed gas is passed over these elements, which remove the moisture contained in it. However this is achieved only up to a certain limiting condition corresponding to the saturation of the adsorbent element. At this point it becomes necessary to regenerate the adsorbent elements by methods based substantially on passing hot air through them at low pressure. In the meantime, delivery of dried compressed gases must obviously continue, this requiring the use of further similar unsaturated adsorbent elements. Hence while certain adsorbent elements are removing moisture from the gas, other adsorbent elements are being regenerated in various ways, ie freed of the water which they have previously removed from the compressed gas.

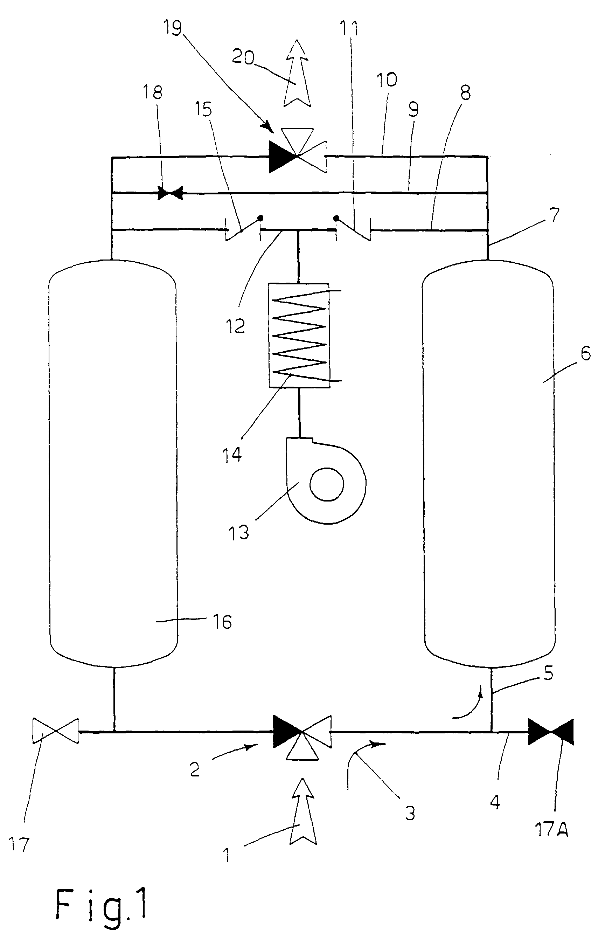

Figures 1, 2 and 3 schematically show plants operating in accordance with those known methods currently most used for drying the adsorbent elements.

With reference to the scheme of Figure 1, a gas 1 to be dried passes through a three-way valve 2; the open ways are indicated by white triangles, the closed ways being indicated by black triangles. The gas 1 is therefore deviated along a direction defined by the arrow 3.

It hence reaches a pipe 4 which is closed by a valve 17A provided for discharge of the regeneration gas. The gas 1 is therefore deviated along a further pipe 5, which feeds it into a vessel 6 containing adsorbent substances (such as silica gel, alumina). At the outlet of the vessel 6 a pipe 7 branches into a further three pipes 8, 9, 10.

The pipe 8 contains a non-return valve 11, air blown by a blower 13 and heated by appropriate elements 14 being fed along the pipe 12.

In this manner this regeneration air stream passes through a non-return valve 15 and from here is fed into a vessel 16 undergoing regeneration. These known non-return valves open, to allow flow in one direction, only if the pressure downstream of them is not equal to or not greater than the pressure applied to their inlet.

The hot air removes the water from the adsorbent elements and emerges into the environment through a discharge valve 17.

In the pipe 9 there is a known valve 18 for the subsequent repressurization of the plant. In the pipe 10 there is a three-way valve 19, which enables a gas 20 to reach the user equipment in the desired dried condition. For driving the air acting as the heat carrier, this arrangement requires the use of the blower 13, comprising a motor and involving considerable energy consumption.

From the plant symmetry it is apparent that when the vessel 6 is saturated, circulation is reversed by operating the valves 2 and 19.

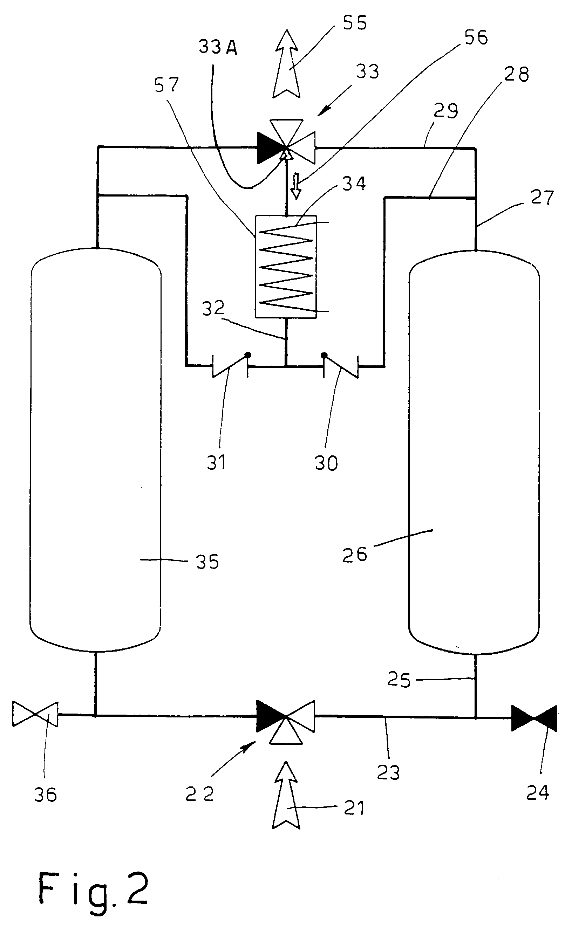

With reference to the scheme of Figure 2, this shows a gas 21 passing through a three-way valve 22 and into a pipe containing a closed discharge valve 24. The pipe 23 can hence convey the flow to a pipe 25 opening into a vessel 26 provided with adsorbent elements. An outlet pipe 27 forks into a pipe 28 closed by a non-return valve 30 and into a further pipe 29. From the pipe 29 the gas reaches a three-way valve 33 with a branch 33A enabling a gas 55 to reach the user equipment in the desired dried condition.

From the valve 33 a small flow of purge gas 56 is continuously bled through the branch 33A which passes into a heat exchanger 57.

It is heated therein by usual elements 34 to then pass into a pipe 32, then through a non-return valve 31 and finally into a vessel 35 containing the adsorbent elements to be regenerated.

The gas hence wetted by the water removed from the saturated adsorbent elements is then freely discharged into the atmosphere through a valve 36.

In this manner a stream of dried air 55 can be generated alternately by the two vessels 26 and 35. Compared with the arrangement of Figure 1, this arrangement is constructionally more economical, but has a higher operating cost due to the large consumption of dried compressed gas.

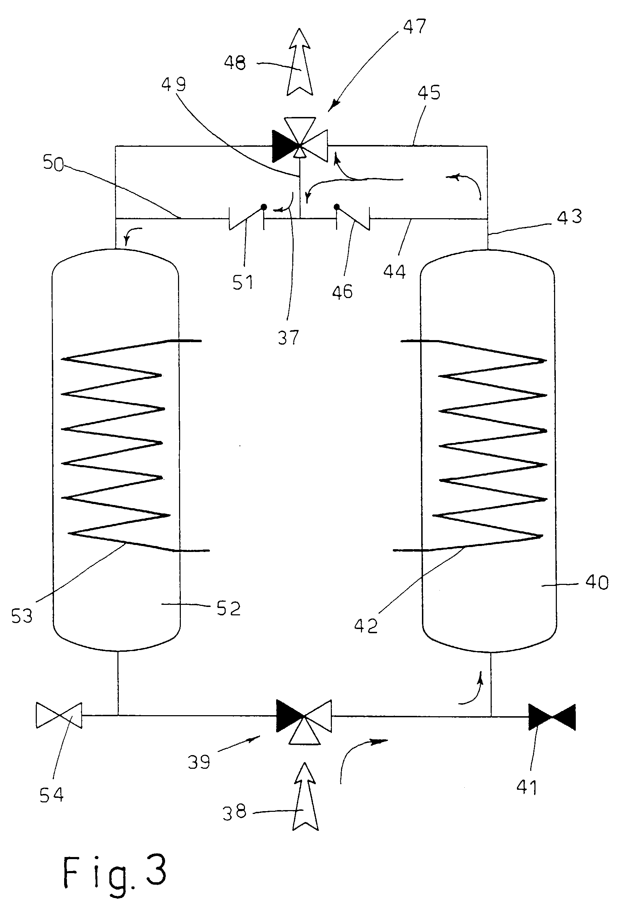

With reference to the scheme of Figure 3, this shows a gas 38 passing via a three-way valve 39 to a vessel 40 following the closure of a discharge valve 41. In this vessel, provided with adsorbent elements, there is a heating element 42, which operates when the adsorbent elements need to undergo water removal. In the illustrated situation this heater is not in operation, so that the compressed gas 38 leaves via a pipe 43 which forks into a pipe 44 and a pipe 45. The pipe 44 contains a non-return valve 46. The pipe 45 passes to a three-way valve 47 which feeds the gas 48 to the user equipment and also feeds a small part 37 of it, representing the purge gas in a quantity of about 10%, to a pipe 49 and then to a pipe 50 after passing through a non-return valve 51. As indicated by the flow arrows, from here it flows into a vessel 52 in which a heater 52 operates to evaporate the water from the adsorbent elements saturated during the preceding operating cycle. The resultant stream of moist gas is finally discharged via a discharge valve 54. This arrangement is particularly costly and involves the provision of heating elements for each of two vessels.

An object of the present invention is to define a process and plant for the hot regeneration of the adsorbent elements used for drying compressed gases, which does not require motors or blowers for driving the regeneration gases.

A further object is to define a process and plant of the aforesaid type which are more reliable than those of known type.

A further object is to define a process and plant of the aforesaid type which requires very little maintenance.

A further object is to define a process and plant of the aforesaid type which operates relatively noiselessly.

A further object is to define a process and plant of the aforesaid type which can be constructed from low-cost means.

A further object is to define a process and plant of the aforesaid type having a low purge gas consumption.

A further object is to define a process and plant of the aforesaid type which is of lower energy consumption.

A further object is to define a process and plant of the aforesaid type which, if non-electrical heaters are used, can also operate in the absence of electrical energy.

These and further objects will be seen to be attained on reading the ensuing detailed description, illustrating a process and plant for the hot regeneration of water adsorbent elements used for drying compressed gases, characterised by using an ejector device fed with purge gas for taking environmental air and passing it into equipment provided for its heating, to then cause it to flow alternately into vessels containing the adsorbent elements, to be regenerated by removing their retained water by means of said heated dry air, which is then freely discharged in the moist state into the external environment.

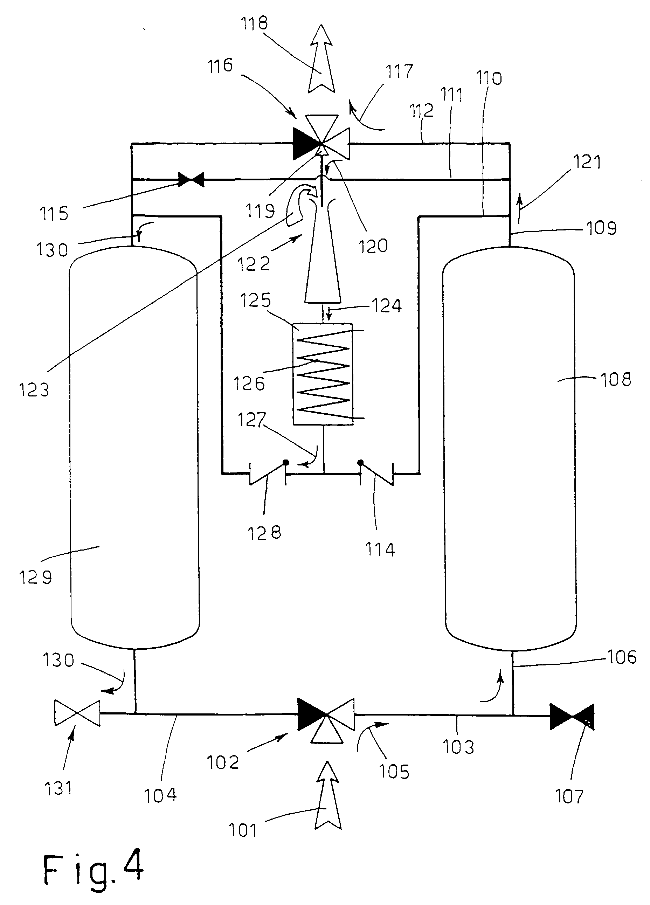

The invention is illustrated schematically by way of non-limiting example in Figure 4.

With reference to said figure, a compressed gas 101 reaches a three-way valve 102. The two white triangles schematically indicate its opening in the direction of a pipe 103 and its closure in the direction of a pipe 104. This is expressed by a flow arrow 105.

The compressed gas flows from the pipe 103 and into a branch pipe 106, there being a closed valve 107 (black triangles) downstream of said pipe 103. The purpose of the valve 107 is to allow expulsion of the purge gas when required.

From the pipe 106 the gas enters a vessel 108 containing adsorbent elements for its contained moisture. Dried gas therefore leaves through the outlet pipe 109.

Said pipe branches into three pipes 110, 111, 112.

The pipe 110 is closed by a non-return valve 114.

The pipe 111 is closed by a plant repressurisation valve 115.

The dried gas can therefore pass only through the pipe 112, containing a three-way valve 116.

The white triangles define the direction in which this valve is open, so that a diversion 117 defines a flow 118 towards the user item for which the plant is intended. By way of a bleed hole 119 a certain flow 120 is diverted to a further use.

Said flow 120 represents about 4% of the total throughput 121 through the pipe 109.

The flow 120 is used to feed an ejector 122, to draw air 123 from the environment in a quantity appropriate to form a purge flow 124 to be heated by passage through a heat exchanger 125.

The heating elements 126 of this heat exchanger can be either electrical or of fluid type.

At the outlet of the heat exchanger 125 there is a hot gas flow 127 which passes through a non-return valve 128 to reach a vessel 129 as indicated by the arrow 130. The other two pipes connected to it are closed by the valves 115 and 116 (closure expressed by the black triangles). Saturated adsorbent elements are present in the vessel 129, so that the hot gas stream grazing them removes the previously retained water from them. The exit flow 130 is hence very wet, and can be released to the outside via an open valve 131.

When regeneration or drying of the adsorbent elements present in the vessel 129 is complete, the repressurization valve 115 is opened and the flow controlled by said valves is reversed, to again use the adsorbent elements to dry the useful flow 118.

This takes place after the vessel 108 has, in the meantime, become charged with moisture to the point at which it can no longer effectively perform its drying role. At this point the illustrated process enables said vessel 108 to advantageously expel to the outside (via the now open valve 107) the water previously retained by the compressed gas passing through its interior.

Although the description refers to an embodiment comprising two vessels which are regenerated alternately, the invention also extends to the case in which groups of vessels are connected in parallel. For example when one group is under regeneration the other is used for drying.

## Claims

1. A process for the hot regeneration of water adsorbent elements used in compressed gas drying plants, characterised in that pressurized dried gases (120) are used to to draw environmental air (123) into heaters (125) provided for its heating (126), to then feed it, mixed with said dried gases, alternately into vessels (108, 129) containing the adsorbent elements to be regenerated by removing the water retained by them using said heated gaseous mixture (127), and then release it in the wet state (130) into the external environment.

2. A plant comprising vessels (108, 129) with water adsorbent elements for drying compressed gases and means for hot-regenerating said adsorbent elements, said means comprising a heater (125) and a valve device (116) which, besides feeding pressurized dried gas towards a user item, enables a pressurized dried gas stream to be to be branched to the heater (125) to enable it to be used, heated, for regenerating said adsorbent elements, characterised in that the pressurized dried gas stream which has been branched off flows through an ejector (122) as the entraining fluid for atmospheric air, the mixture resulting from the branched-off dried gas and the atmospheric air being heated in the heater (125), to be used for regenerating said adsorbent elements.

3. A plant as claimed in claim 2, characterised by a three-way valve (102) positioned at the inlet of the vessels (108, 129), a three-way valve (116) with a branch (119) positioned at the outlet of said vessels (108, 129), an ejector (122) communicating with said branch (119), and a heat exchanger (125), said plant comprising:
a) at least two drying vessels (108, 129) alternately subjectable to regeneration by a mixture of dried gas fed under pressure via the branch (119) and atmospheric air drawn into the ejector (122) by said dried gas;
b) and a valve system for discharging the gaseous mixture enriched with moisture and for repressurizing the vessels.
